# EUROPÄISCHE PATENTSCHRIFT

(11) **EP 0 892 285 B1**
(45) Veröffentlichungstag und Bekanntmachung des Hinweises auf die Patenterteilung: **17.04.2002**
(21) Anmeldenummer: 98111630.4
(22) Anmeldetag: 24.06.1998
(51) Int. Cl.: G01V 3/10

(54) **Verfahren und Vorrichtung zur elektromagnetischen Detektion von Objekten**
Method and arrangement for electromagnetic object detection
Procédé et dispostitif pour la détection électromagnétique des objets

(30) Priorität: 18.07.1997 DE 19730952
(43) Veröffentlichungstag der Anmeldung: 20.01.1999
(73) Patentinhaber: FIRMA ING. KLAUS EBINGER, D-51149 Köln (DE)
(72) Erfinder: Ebinger, Klaus, 51143 Köln (DE)
(74) Vertreter: Heim, Hans-Karl, Dipl.-Ing.

(56) Entgegenhaltungen:
- EP-A- 0 780 704
- DE-A- 19 506 339
- GB-A- 2 041 532
- US-A- 4 030 026

## Beschreibung

Die Erfindung betrifft ein Verfahren zur elektromagnetischen Detektion von Objekten, bei dem pulsförmige Primärsignale von mindestens einer Sendeschleife ausgestrahlt werden und Sekundärsignale zu mindestens zwei verschiedenen Zeitpunkten von mindestens einer Empfangsschleife in Form von Abtastsignalen detektiert und diese ausgewertet werden. Weiterhin betrifft die Erfindung eine Detektorvorrichtung und eine Vorrichtung zur elektromagnetischen Detektion von Objekten, insbesondere zur Durchführung des Verfahrens, mit mindestens einer Sendeschleife zur Ausstrahlung eines pulsförmigen Primärsignals, mit mindestens einer Empfangsschleife zum Empfang eines Sekundärsignals, mit mindestens zwei Sample- und Hold-Schaltungen zur Erzeugung von Abtastsignalen des Sekundärsignals zu zwei verschiedenen Zeitpunkten und einer Auswerteeinrichtung.

Ein Verfahren und eine Vorrichtung der eingangs genannten Art sind aus GB 2 041 532 A bekannt. Im Zusammenhang mit dem dort beschriebenem Verfahren wird dargestellt, wie nach Ausstrahlung eines Einzelimpulses das empfangene Sekundärsignal zeitlich abklingt. Dabei wird ein unterschiedliches Abklingverhalten der Signale beobachtet, je nachdem ob diese auf den Untergrund oder auf ein metallisches Objekt zurückzuführen sind. Verschiedene metallische Objekte zeigen auch unterschiedliche Abklingkurven. Durch Detektion des Signals zu zwei verschiedenen Zeitpunkten kann so ein Objektsignal ermittelt und ein Untergrundsignal eliminiert werden. Problematisch ist bei dieser Vorrichtung, daß bei der zuerst vorgenommenen Messung ein wesentlich höherer Signalpegel als bei der späteren Messung entsteht, so daß bei der letzteren Messung eine vielfach größere Signalverstärkung als bei der zuerst vorgenommenen Messung notwendig ist. Dadurch wird zum einen das interne Rauschen angehoben und zum anderen nimmt die Schaltung auch in einem erhöhten Maße niederfrequente Wechselfelder und EMV als Störungen auf. Metallgegenstände mit sehr kleiner Zeitkonstante können dadurch im Störpegel untergehen und nicht mehr detektiert werden.

Aus der DE 195 06 339 A1 ist es allgemein bekannt, die Abklingkurve eines detektierten Sekundärsignals durch eine Vielzahl von Samplingpulsen abzutasten und das Sekundärsignal durch Addition oder Subtraktion der verschiedenen Samplingpulse auszuwerten.

Der Erfindung liegt die **Aufgabe** zugrunde, ein Verfahren der eingangs genannten Art zu schaffen, mit dem besonders exakte Messungen und auch eine Ermittlung von sehr kleinen Objekten möglich ist. Weiterhin liegt der Erfindung die Aufgabe zugrunde, eine Vorrichtung zur Durchführung eines solchen Verfahrens zu schaffen.

Zur Lösung der Aufgabe wird erfindungsgemäß ein Verfahren mit den kennzeichnenden Merkmalen des Anspruchs 1 geschaffen. Vorrichtungsmäßig wird die Aufgabe durch eine Vorrichtung mit den kennzeichnenden Merkmalen des Anspruchs 12 und weiterhin durch eine Detektorvorrichtung mit den Merkmalen des Anspruchs 21 gelöst. Vorteilhafte Weiterbildungen der Erfindung sind in den Unteransprüchen beschrieben.

Nach einem wesentlichen Grundgedanken der Erfindung wird mit einer als Sende- und Empfangsschleife ausgebildeten Schleife zunächst ein Einzelimpuls ausgestrahlt, der ein zu detektierendes Objekt zur Ausstrahlung eines Sekundärsignals veranlaßt, welches zum einen von der Sende-und Empfangsschleife und zum anderen auch von einer weiteren Empfangsschleife empfangen wird. Dabei wird das von dem metallischen Objekt ausgehende Sekundärsignal mit der einzelnen Empfangsschleife zu einem frühen Zeitpunkt abgetastet, während mit der Sende- und Empfangsschleife das Sekundärsignal zu einem späteren Zeitpunkt abgetastet wird. Dabei werden Zeitpunkt, Dauer und Anzahl der Abtastsignale der frühen Messung des Sekundärsignals und der späten Messung des Sekundärsignals aufeinander abgestimmt, so daß für die frühe Messung und für die späte Messung eine Signalpegelanpassung erreicht wird.

Durch eine solche Potentialanpassung der beiden Empfangskanäle, die durch die verschiedenen Empfangsschleifen gebildet werden, sinkt der interne Störpegel und äußere elektromagnetische Einflüsse werden nur in einem sehr geringem Maße aufgenommen. Dadurch steigt auch die Empfindlichkeit der Suchanordnung. Diese Anpassung wird auch durch die Durchführung der frühen Messung mit der Empfangsschleife und die Durchführung der späteren Messung mit der Sende-und Empfangsschleife möglich, da dadurch die beiden Signale vollständig voneinander entkoppelt sind, und bei der späten Messung keine Störeinflüsse von der frühen Messung auftreten. Zum Zeitpunkt der späten Messung sind auch die primären Sendevorgänge in dieser Schleife längst abgeklungen, so daß auch von dieser Seite keine Störungen zu erwarten sind.

Die Potentialanpassung erfolgt beispielsweise dadurch, daß die späte Messung über einen deutlich längeren Zeitraum als die frühe Messung durchgeführt wird, so daß die Energieinhalte der beiden Messungen in etwa übereinstimmen. Ein genauer Abgleich zur Bodenkompensation kann dann z. B. durch eine Einstellung des genauen Meßzeitpunkts erfolgen, da bei Verschiebung des Meßzeitpunkts zu einem noch späteren Zeitpunkt aufgrund der abfallenden Abklingkurve der Energieinhalt der späten Messung kleiner wird.

Mit einem solchen Suchverfahren ist eine besonders rauschfreie Detektion von Objekten und auch eine Objektanalyse und Bodenkompensation möglich. Dieses Verfahren kann bei der Minensuche oder in anderen militärischen Anwendungen und auch im Bereich der Archäologie eingesetzt werden, da auch eine Unterscheidungsmöglichkeit zwischen Eisen und Nichteisenteilen gegeben ist. Auch ist z. B. die Suche nach Goldnuggets in mineralisierten Böden möglich.

In einer bevorzugten Weiterbildung der Erfindung wird die Sendeschleife zur Aussendung der Primärsignale mit bipolaren Impulsen beaufschlagt, obwohl auch die Verwendung von Mono-Einzelimpulsen möglich ist. Die Impulse werden mit einer Frequenz von 10 Hz bis 10 KHz ausgestrahlt. Dabei wird günstigerweise nach jedem ausgesendeten Impuls eine Messung durchgeführt. Dabei können im Erregersignal auch unterschiedliche Pulsformen in bezug auf Breite, Wiederholzeit und Gruppierung, als auch im Sinne einer Funktionscodierung Verwendung finden.

Die frühe Messung erfolgt bevorzugt etwa 10 bis 15 µs nach Aussendung des Primärsignals bzw. nach Abgabe des Erregerimpulses, während die späte Messung bevorzugt etwa 80 bis 120 µs nach Abgabe des Erregerimpulses erfolgt. Die späte Messung kann dabei mit einer Dauer zwischen 1 und 50 µs durchgeführt werden. In einer anderen bevorzugten Ausführungsform werden für die späte Messung fünf Abtastsignale gemessen, die dann zu einem Gesamtsignal aufsummiert werden. Mit diesen Maßnahmen ist eine flexible Anpassung der Signalpegel aneinander und der Energieinhalte der Signalpegel möglich. Dabei ist die Anwendung einer Vielzahl von Abtastsignalen oder Samplingpulsen für die späte Messung bevorzugt, wobei dann günstigerweise auch eine Mehrzahl von Sample- und Hold-Schaltungen und entsprechende Verknüpfungseinrichtungen zur Auswertung der verschiedenen Abtastsignale eingesetzt werden. Die Vielzahl der Abtastsignale kann dabei entweder aufaddiert werden oder es können auch verschiedene Teilsummen gebildet werden, deren Auswahl in Abhängigkeit von dem Untergrund erfolgt. Diese Teilsummen können dann zur Kompensation von Untergrundeffekten voneinander subtrahiert werden.

Bevorzugt wird auch durch die Anpassung des Zeitpunkts, der Zeitdauer und/oder der Anzahl der Abtastsignale der frühen Messung des Sekundärsignals und der späten Messung des Sekundärsignals eine Bodenkompensation durchgeführt, wobei die Bodenkompensation günstigerweise so durchgeführt wird, daß Zeitpunkt, Zeitdauer und Anzahl der Abtastsignale der späten Messung des Sekundärsignals in Bodennähe so eingestellt werden, daß die Anzeige abgeglichen wird. Besonders günstig ist dabei eine schaltungstechnische Voreinstellung der Zeitdauer der späten Messung und eine Anpassung des Zeitpunkts der späten Messung an den tatsächlich zu kompensierenden Untergrund.

In einer anderen bevorzugten Weiterbildung der Erfindung erfolgt neben der frühen und der späten Messung des Sekundärsignals noch eine weitere dritte Messung des Sekundärsignals. Durch eine solche dritte Messung, die auch noch um weitere Messungen ergänzt werden kann, können weitere Detailinformationen über das gesuchte Objekt erhalten werden, falls dies erforderlich ist. Im Prinzip können beliebig viele Messungen durchgeführt werden, wobei für jede einzelne Messung eine Mehrzahl von Abtastsignalen detektiert und ausgewertet werden kann, wie es oben für die spätere Messung beschrieben worden ist.

In einer anderen Weiterbildung der Erfindung können zwei parallel geschaltete Schleifenanordnungen eingesetzt werden, die jede für sich entsprechend dem oben beschriebenen Verfahren betrieben werden, wobei die Signale der beiden Schleifenanordnungen voneinander subtrahiert werden. Auf diese Weise wird ein Differenzmeßprinzip verwirklicht, bei dem sich die von zwei verschiedenen Schleifen detektierten Störsignale gegenseitig eliminieren.

Bei einer zweckmäßigen Ausbildung der Erfindung kann die Empfangsschleife für die frühe Messung auch direkt so angelegt sein, daß mit ihr eine direkte Differenzmessung durchgeführt wird. Dazu kann die Schleife in Form einer Acht oder einer ähnlichen Anordnung ausgelegt sein, so daß sich die in den beiden Schleifen der Acht induzierten Signale hinsichtlich des überlagerten Untergrundsignals gegenseitig eliminieren.

Bei der erfindungsgemäßen Vorrichtung zur elektromagnetischen Detektion von Objekten, mit der auch das oben beschriebene erfindungsgemäße Verfahren durchgeführt werden kann, sind zwei Schleifen vorgesehen, wobei die eine Schleife als Sende- und Empfangsschleife und die andere Schleife als reine Empfangsschleife ausgebildet ist, und die beiden Schleifen galvanisch voneinander entkoppelt sind. Dadurch wird erreicht, daß die mit den beiden Schleifen empfangenen Signale sich gegenseitig nicht beeinflussen können. Weiterhin ist eine Sample- und Hold-Schaltung zur Durchführung einer frühen Messung mit der Empfangsschleife verbunden und eine weitere Sample- und Hold-Einrichtung ist zur Durchführung der späten Messung mit der Sende- und Empfangsschleife verbunden. Die Sample- und Hold-Schaltungen weisen weiterhin eine Steuereinrichtung auf, die Zeitpunkt, Zeitdauer und Anzahl der Abtastsignale so einstellt, daß die Signalpegel der frühen Messung und der späten Messung aneinander angepaßt sind.

Mit einer solchen erfindungsgemäßen Vorrichtung kann eine besonders genaue Messung durchgeführt werden, da Rauschen und Störeinflüsse zum einen durch die Verwendung von zwei getrennten Empfangsschleifen und zum anderen durch die Signalpegelanpassung stark vermindert werden. Mit einer solchen Vorrichtung ist auch eine Objektanalyse möglich, da die Abklingkurve des Sekundärsignals zu mindestens zwei verschiedenen Zeitpunkten gemessen wird. Weiterhin ist auch eine Bodenkompensation möglich.

In der erfindungsgemäßen Vorrichtung sind bevorzugt Verstärker zwischen den Empfangsschleifen und den Sampleund Hold-Schaltungen vorgesehen. Weiterhin ist günstigerweise eine Differenzstufe vorgesehen, in der die Signale der frühen Messung und der späten Messung voneinander subtrahiert werden. Zwischen den Sample- und Hold-Schaltungen und der Differenzstufe ist vorteilhafterweise jeweils ein weiterer Verstärker angeordnet. Durch diese Ausgestaltung der Erfindung wird eine gleichmäßige Verstärkung der empfangenen Signale erreicht. In der Differenzsstufe findet eine Verknüpfung der frühen Messung und der späten Messung durch eine Subtraktion statt.

Bevorzugt weist jede der beiden Sample- und Hold-Schaltungen eine Steuereinrichtung auf, die mit einer Erregerschaltung elektrisch verbunden ist. Dadurch kann jede der Steuereinrichtungen exakt den Zeitpunkt der Messung nach Aussendung des Primärimpulses vorgeben. Vorteilhafterweise ist die Steuereinrichtung, die der Sample- und Hold-Schaltung für die Sende- und Empfangsspule für die späte Messung zugeordnet ist, hinsichtlich Zeitpunkt, Zeitdauer und Anzahl der Abtastsignale einstellbar. Dadurch kann eine besonders genaue Anpassung der beiden Signale zueinander erreicht werden. Mit einer solchen einstellbaren Anordnung kann auch eine Bodenkompensation durchgeführt werden. Bei Verwendung einer größeren Anzahl von Abtastsignalen muß die Schaltung gegebenenfalls um weitere Sample- und Hold-Schaltungen oder um Summierer mit Zwischenspeicher erweitert werden.

Die Sende- und Empfangsschleife umschließt in einer bevorzugten Ausführungsform die Empfangsschleife. Bevorzugt sind die Schleifen rund ausgebildet, obwohl auch ovale, quadratische oder andere Raumformen möglich sind.

Weiterhin ist in einer bevorzugten Ausführungsform ein analoges Anzeigeelement zur Anzeige des Signals der Differenzstufe vorgesehen. Mit diesem kann ein Nullabgleich durchgeführt werden. Die Ausschläge in Form einer Plus- und Minusanzeige, die entsprechend der Ausgabe der Differenzstufe erfolgen, können besonders leicht erfaßt werden.

In einer Weiterbildung der Erfindung sind zwei parallel zueinander geschaltete Vorrichtungen entsprechend der oben beschriebenen Ausführungsform vorgesehen, deren Differenzstufen durch eine weitere Differenzstufe miteinander verbunden sind. Auf diese Weise kann ein Differenzmeßprinzip verwirklicht werden, wobei die einzelnen Schaltkreise jeweils als Relativ- oder Absolutmesser wirken. Bevorzugt sind die beiden parallel geschalteten Vorrichtungen absolut symmetrisch aufgebaut. Durch diese Maßnahme werden eine besonders geringe Störanfälligkeit und ein geringer Rauschpegel erreicht.

In einer anderen Weiterbildung der Erfindung wird die reine Empfangsschleife direkt als Differenzmesser ausgebildet, wobei die Empfangsschleife dann beispielsweise in Form einer Acht ausgebildet ist. In den Teilbereichen induzieren sich dann durch den Untergrund hervorgerufene, entgegengesetzt gleiche Spannungen, wodurch sich das Primärfeld in diesen Wicklungen aufhebt und Metallobjekte mit sehr kleiner Zeitkonstante noch besser erkannt werden.

Nachfolgend wird die Erfindung anhand von zwei in der Zeichnung dargestellten Ausführungsbeispielen weiter erläutert. Im einzelnen zeigen die schematischen Darstellungen in:
- Fig. 1: eine schematische Darstellung einer erfindungsgemäßen Vorrichtung; und
- Fig. 2: eine schematische Darstellung einer erfindungsgemäßen Vorrichtung mit zwei parallel zueinander angeordneten Schaltungen gemäß Figur 1.

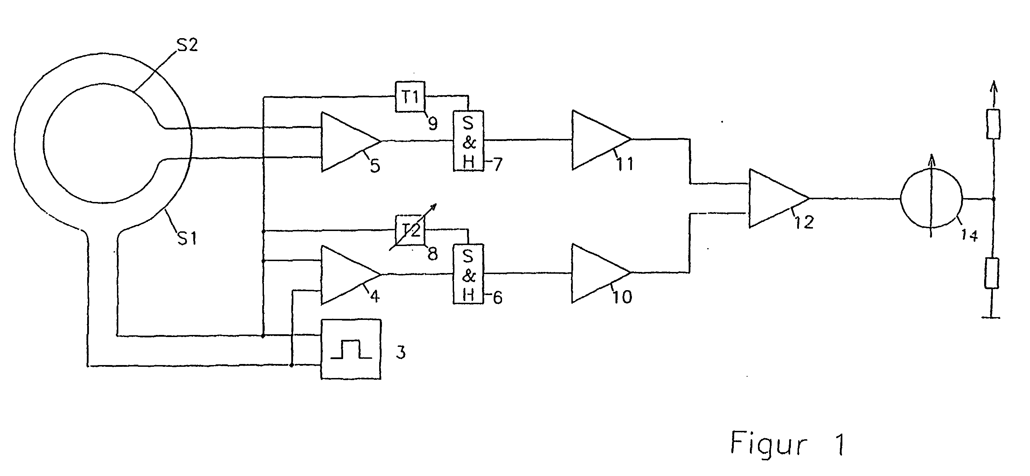

Figur 1 zeigt einen Absolut- bzw. Relativmesser mit einer Sende- und Empfangsschleife S1 und einer Empfangsschleife S2. Die beiden Schleifen S1 und S2 sind kreisförmig ausgebildet und die Empfangsschleife S2 ist innerhalb der Sende-und Empfangsschleife S1 angeordnet. Die Sende- und Empfangsschleife S1 wird über eine Erregerstufe 3 betrieben, über die Mono-Einzelimpulse oder bipolare Einzelimpulse erzeugt und über die Sende- und Empfangsschleife S1 ausgestrahlt werden. Durch diese Primärimpulse wird ein Objekt zur Aussendung eines Sekundärsignals angeregt, welches von der Empfangsspule S2 und der Sende- und Empfangsspule S1 empfangen wird. Die empfangenen Signale werden durch die mit den Schleifen S1 und S2 verbundenen Verstärker 4 und 5 verstärkt und Sample- und Hold-Schaltungen 6 und 7 zugeführt. Der Sample- und Hold-Schaltung 7, die mit der Empfangsspule S2 verbunden ist, ist eine Steuereinrichtung 9 zugeordnet, die wiederum mit der Erregerstufe 3 verbunden ist und so eingestellt ist, daß die Abklingkurve des Sekundärsignals von der Empfängerschleife S2 zu einem frühen Zeitpunkt von der Sample- und Hold-Schaltung 7 gemessen und gespeichert wird. Eine typische Zeitdauer ist etwa 10 bis 15 µs nach Aussendung des Primärsignals. Wichtig ist dabei, die Messung möglichst schnell nach Aussendung des Primärsignals durchzuführen, da so auch sehr kleine Objekte erkannt werden können.

Auf die gleiche Weise ist für die Sample- und Hold-Schaltung 6, die mit der Sende- und Empfangsspule S1 verbunden ist, eine Steuerschaltung 8 vorgesehen, die die Sample- und Hold-Schaltung veranlaßt, die Abklingkurve zu einem späten Zeitpunkt zu messen und zu speichern. Diese späte Speicherung kann beispielsweise 80 bis 120 µs nach Aussendung des Primärsignals erfolgen. Durch die sehr frühe Meßzeit von 10 bis 15 µs mit der Empfangsspule S2, die galvanisch getrennt von der anderen Sende- und Empfangsschleife S1 ist, ist eine Ortung auch sehr kleiner Metallteile möglich, da zur Ortung sehr kleiner Metallteile eine besonders rauschfreie Messung gerade zu Beginn der Abklingkurve nötig ist. Die in den Sample- und Hold-Schaltungen 6 und 7 gespeicherten frühen und späten Messungen werden dann von Verstärkern 10 und 11 noch einmal verstärkt und in der Differenzstufe 12 voneinander subtrahiert. Über ein analoges Anzeigeinstrument 14 wird das Ergebnis dann angezeigt, wobei ein Nullabgleich durchgeführt wird, so daß die Anzeige Null anzeigt, falls kein Objekt vorliegt und bei Vorliegen eines Objekts ein Plus- oder Minusausschlag erfolgt.

Von entscheidender Bedeutung sind die Steuerstufen 8 und 9, die hinsichtlich des Zeitpunkts, der Zeitdauer und der Anzahl der Abtastsignale oder Samplingpulse fest eingestellt oder einstellbar sind, so daß sich die Energieinhalte der frühen und der späten Messung entsprechen und eine stark ungleichmäßige Verstärkung der beiden Signale vermieden wird.

Auch störende Bodeneinflüsse können kompensiert werden, indem mit der Steuereinrichtung 8 beispielsweise der Zeitpunkt der späteren Messung T2 verändert wird. Zu diesem Zweck wird die Suchanordnung in Bodennähe geführt und so verändert, daß sich die Anzeige Null ergibt. Dann wird die Suchanordnung vom Boden hochgenommen und der Nullabgleich entweder über die Verstärkung der Verstärker 10 und 11 oder deren DC-Arbeitspunkt korrigiert. Auch der DC-Arbeitspunkt der Differenzstufe 12 kann zur Nullpunktkorrektur verändert werden. Dieser Abgleich erfolgt automatisch über einen Kontrollpuls, mit dem die zeitliche Bodenkompensation durch die Steuereinrichtungen so erfolgt, daß die Störanzeige zu Null wird. Die zeitlichen Rückwirkungen des störenden Bodens verteilen sich dadurch gleichmäßig auf die Verstärkungsstufen 10 und 11, so daß deren Differenz in der Differenzstufe 12 Null ergibt und nur das gesuchte metallische Objekt zur Anzeige gebracht wird. Bei der Bodenkompensation ist es von Bedeutung, daß der Gleichtakt in den beiden Empfangskanälen, die durch die Empfangsschleife S2 und die Sende- und Empfangsschleife S1 gebildet werden, hergestellt wird. Da über zwei verschiedene Schleifen gemessen wird, ist eine Gleichtaktunterdrückung bei Erfassung des eigentlichen Suchobjekts besonders gut möglich.

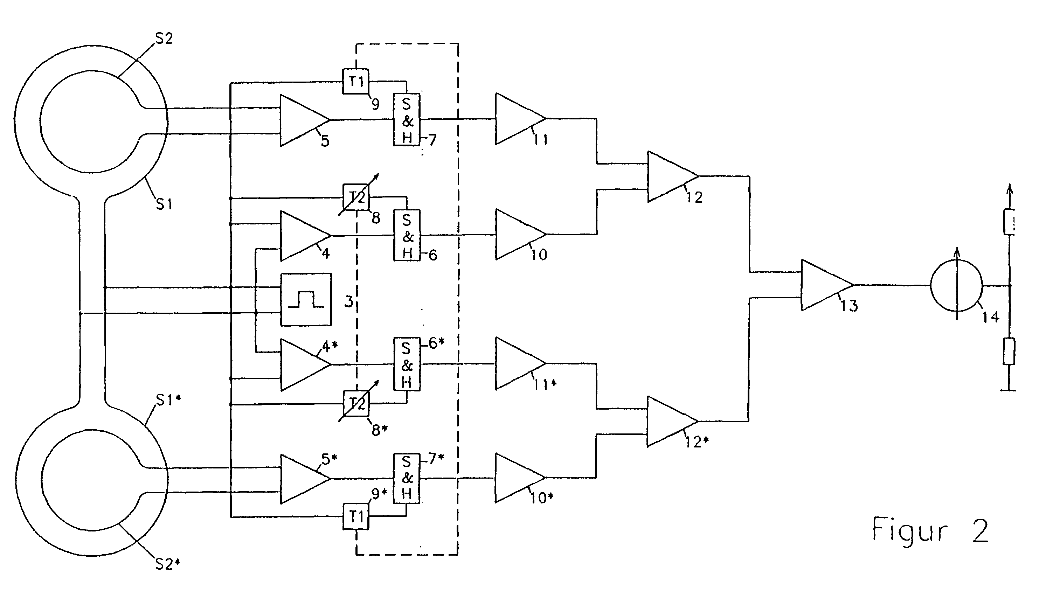

In Figur 2 ist eine Suchanordnung nach dem Differenzprinzip dargestellt, die aus zwei parallel geschalteten Absolutmessern gemäß Figur 1 besteht. Die beiden Sende- und Empfangsschleifen S1 und S1*, die jeweils allseitig symmetrisch die Empfangsschleifen S2 und S2* umfassen, werden über die Erregerstufe 3 gepulst. Die Erregerstufe 3 ist ebenfalls mit den Steuerschaltungen 8, 9, 8* und 9* verbunden, die vor allem den Zeitpunkt der Messungen festlegen, aber auch hinsichtlich Zeitdauer und Anzahl der Samplingimpulse Steuerungsmöglichkeiten bieten. Die Messungen der beiden Empfangsschleifen S2 und S2* finden zeitgleich zum Zeitpunkt T1 statt. Ebenso finden die Messungen der Sende- und Empfangsschleifen S1 und S1* zeitgleich zum Zeitpunkt T2 statt. Hinter den vier Sample- und Hold-Schaltungen 6, 7, 6* und 7* werden insgesamt vier DC-Signalwerte generiert. Auf jeder Kanalseite erfolgt zwischen den Werten der Sendeschleife S2 und der Sende- und Empfangsschleife S1 mit den Meßzeitpunkten T1 und T2 die Bodenanpassung. Die Werte eines jeden Kanals werden dann voneinander in der Differenzstufe 12 subtrahiert. Die so entstandenen Signalspannungen beider Kanäle werden dann über die letzte Differenzstufe 13 nochmals miteinander verglichen und in dem analogen Anzeigegerät 14 zur Anzeige gebracht.

## Patentansprüche

1. Verfahren zur elektromagnetischen Detektion von Objekten, bei dem pulsförmige Primärsignale von mindestens einer Sendeschleife ausgesendet werden, Sekundärsignale zu mindestens zwei verschiedenen Zeitpunkten von mindestens einer Empfangsschleife in Form von Abtastsignalen detektiert und diese ausgewertet werden,
**dadurch gekennzeichnet,**
**daß** zunächst mit der Empfangsschleife eine frühe Messung des Sekundärsignals durchgeführt wird,
**daß** die Sendeschleife als Sende- und Empfangsschleife verwendet wird und mit dieser nachfolgend eine späte Messung des Sekundärsignals durchgeführt wird, und
**daß** Zeitpunkt, Zeitdauer und/oder Anzahl der Abtastsignale der frühen Messung des Sekundärsignals und der späten Messung des Sekundärsignals so aufeinander abgestimmt werden, daß für die frühe Messung und für die späte Messung eine Anpassung der Signalpegel erreicht wird.

2. Verfahren nach Anspruch 1,
**dadurch gekennzeichnet,**
**daß** bipolare Einzelimpulse als Erregerimpulse auf die Sende- und Empfangsschleife abgegeben werden.

3. Verfahren nach einem der vorhergehenden Ansprüche,
**dadurch gekennzeichnet,**
**daß** die frühe Messung etwa 10 bis 15 µs nach Abgabe des Erregerimpulses erfolgt.

4. Verfahren nach einem der vorhergehenden Ansprüche,
**dadurch gekennzeichnet,**
**daß** die späte Messung etwa 80 bis 120 µs nach Abgabe des Erregerimpulses erfolgt.

5. Verfahren nach einem der vorhergehenden Ansprüche,
**dadurch gekennzeichnet,**
**daß** die späte Messung mit einer Dauer von ca. 1 bis 50 µs durchgeführt wird.

6. Verfahren nach einem der vorhergehenden Ansprüche,
**dadurch gekennzeichnet,**
**daß** für die späte Messung mehrere, insbesondere etwa fünf Abtastsignale aufsummiert werden.

7. Verfahren nach einem der vorhergehenden Ansprüche,
**dadurch gekennzeichnet,**
**daß** das Signal der frühen Messung und das Signal der späten Messung voneinander subtrahiert werden.

8. Verfahren nach einem der vorhergehenden Ansprüche,
**dadurch gekennzeichnet,**
**daß** durch eine Anpassung des Zeitpunkts, der Zeitdauer und/oder der Anzahl der Abtastsignale eine Bodenkompensation durchgeführt wird.

9. Verfahren nach Anspruch 8,
**dadurch gekennzeichnet,**
**daß** die Bodenkompensation durchgeführt wird, indem Zeitpunkt, Zeitdauer und/oder Anzahl der Abtastsignale der späten Messung in Bodennähe so eingestellt werden, daß die Anzeige abgeglichen wird.

10. Verfahren nach einem der vorhergehenden Ansprüche,
**dadurch gekennzeichnet,**
**daß** zwei parallel geschaltete Schleifenanordnungen eingesetzt werden, die jede für sich entsprechend dem in einem der Ansprüche 1 bis 9 beschriebenen Verfahren betrieben werden, und
**daß** die Signale der beiden Schleifenanordnungen voneinander subtrahiert werden.

11. Verfahren nach einem der vorhergehenden Ansprüche,
**dadurch gekennzeichnet,**
**daß** mit der Empfangsschleife für die frühe Messung eine Differenzmessung durchgeführt wird.

12. Vorrichtung zur elektromagnetischen Detektion von Objekten, insbesondere zur Durchführung des Verfahrens nach einem der Ansprüche 1 bis 11,
mit mindestens einer Sendeschleife zur Aussendung eines pulsförmigen Primärsignals, mit mindestens einer Empfangsschleife (S2), mit mindestens zwei Sample- und Hold-Schaltungen (6, 7) zur Erzeugung von Abtastsignalen eines Sekundärsignals zu zwei verschiedenen Zeitpunkten und einer Auswerteeinrichtung,
**dadurch gekennzeichnet,**
**daß** die Sendeschleife als Sende- und Empfangsschleife (S1) ausgebildet ist,
**daß** die Sende- und Empfangsschleife (S1) und die Empfangsschleife (S2) galvanisch entkoppelt sind,
**daß** eine Sample- und Hold-Schaltung (7) zur Durchführung einer frühen Messung mit der Empfangsschleife (S2) verbunden ist, und
**daß** eine weitere Sample- und Hold-Schaltung (6) zur Durchführung der späten Messung mit der Sende- und Empfangsschleife (S1) verbunden ist,
**daß** die Sample- und Hold-Schaltungen (6, 7) eine Steuereinrichtung (8) zur Einstellung von Zeitpunkt, Zeitdauer und/oder Anzahl der Abtastsignale aufweisen.

13. Vorrichtung nach Anspruch 12,
**dadurch gekennzeichnet,**
**daß** zwei Verstärker (4, 5) zwischen den Empfangsschleifen (S1, S2) und den Sample- und Hold-Schaltungen (6, 7) vorgesehen sind.

14. Vorrichtung nach einem der Ansprüche 12 oder 13,
**dadurch gekennzeichnet,**
**daß** eine Differenzstufe (12) vorgesehen ist, in der die Signale der frühen Messung und der späten Messung voneinander subtrahiert werden.

15. Vorrichtung nach einem der Ansprüche 12 bis 14,
**dadurch gekennzeichnet,**
**daß** zwischen den Sample- und Hold-Schaltungen (6, 7) und der Differenzstufe (12) jeweils ein Verstärker (10, 11) angeordnet ist.

16. Vorrichtung nach einem der Ansprüche 12 bis 15,
**dadurch gekennzeichnet,**
**daß** jede Sample- und Hold-Schaltung (6, 7) eine Steuereinrichtung (8, 9) aufweist, die mit einer Erregerschaltung (3) elektrisch verbunden ist.

17. Vorrichtung nach einem der Ansprüche 12 bis 16,
**dadurch gekennzeichnet,**
**daß** die Steuereinrichtung (8), die der Sample- und Hold-Schaltung (6) für die Sende- und Empfangsschleife (S1) für die späte Messung zugeordnet ist, hinsichtlich Zeitpunkt, Zeitdauer und/oder Anzahl der Abtastsignale einstellbar ist.

18. Vorrichtung nach einem der Ansprüche 12 bis 17,
**dadurch gekennzeichnet,**
**daß** die Sende- und Empfangsschleife (S1) die Empfangsschleife (S2) allseitig symmetrisch umfaßt.

19. Vorrichtung nach einem der Ansprüche 12 bis 18,
**dadurch gekennzeichnet,**
**daß** ein analoges Anzeigeinstrument (14) zur Anzeige des Signals der Differenzstufe (12, 13) vorgesehen ist.

20. Vorichtung nach einem der Ansprüche 12 bis 19,
**dadurch gekennzeichnet,**
**daß** die Empfangsschleife (S2) als Differenzmesser ausgebildet ist.

21. Detektor-Vorrichtung
**dadurch gekennzeichnet,**
**daß** zwei parallel zueinander geschaltete Vorrichtungen gemäß einem der Ansprüche 12 bis 20 vorgesehen sind,
**daß** deren Differenzstufen (12, 12*) durch eine weitere Differenzstufe (13) miteinander verbunden sind.

22. Detektor-Vorrichtung nach Anspruch 21,
**dadurch gekennzeichnet,**
**daß** die zwei parallel zueinander geschalteten Vorrichtungen symmetrisch zueinander aufgebaut sind.

## Claims

1. Method for the electromagnetic detection of objects, in which pulse-shaped primary signals are transmitted by at least one transmitting loop and secondary signals are detected at at least two different instants by at least one receiving loop in the form of sampling signals, which are evaluated,
**characterized**
**in that** initially with the receiving loop an early measurement of the secondary signal takes place,
**in that** the transmitting loop is used as a transmitting and receiving loop and with the latter subsequently a late measurement of the secondary signal is carried out and
**in that** the instant, time duration and/or number of sampling signals of the early measurement of the secondary signal and the late measurement of the secondary signal are so matched to one another that for the early measurement and for the late measurement a signal level adaptation is obtained.

2. Method according to claim 1,
**characterized**
**in that** bipolar single pulses are emitted as excitation pulses on the transmitting and receiving loop.

3. Method according to one of the preceding claims,
**characterized**
**in that** the early measurement takes place approximately 10 to 15 µs after emitting the excitation pulse.

4. Method according to one of the preceding claims,
**characterized**
**in that** the late measurement takes place approximately 80 to 120 µs after emitting the excitation pulse.

5. Method according to one of the preceding claims,
**characterized**
**in that** the late measurement is performed for a duration of approximately 1 to 50 µs.

6. Method according to one of the preceding claims,
**characterized**
**in that** several and in particular approximately five sampling signals are summated for the late measurement.

7. Method according to one of the preceding claims,
**characterized**
**in that** the early measurement signal and the late measurement signal are subtracted from one another.

8. Method according to one of the preceding claims,
**characterized**
**in that** by an adaptation of the instant, time period and/or number of sampling signals a ground compensation is performed.

9. Method according to claim 8,
**characterized**
**in that** ground compensation is carried out in that the instant, time period and/or number of sampling signals of the late measurement in the vicinity of the ground is adjusted in such a way that the indication is balanced.

10. Method according to one of the preceding claims,
**characterized**
**in that** two parallel connected loop arrangements are used, each of which is independently operated according to the method described in one of the claims 1 to 9 and
**in that** the signals of the two loop arrangements are subtracted from one another.

11. Method according to one of the preceding claims,
**characterized**
**in that** a differential measurement is performed with the receiving loop for the early measurement.

12. Apparatus for the electromagnetic detection of objects, particularly for performing the method according to one of the claims 1 to 11,
having at least one transmitting loop for transmitting a pulse-shaped primary signal, having at least one receiving loop (S2), having at least two sample and hold circuits (6, 7) for generating sampling signals of a secondary signal at two different instants and an evaluating device,
**characterized**
**in that** the transmitting loop is constructed as a transmitting and receiving loop (S1),
**in that** the transmitting and receiving loop (S1) and the receiving loop (S2) are directly decoupled,
**in that** a sample and hold circuit (7) is connected to the receiving loop (S2) for performing an early measurement and
**in that** a further sample and hold circuit (6) is connected to the transmitting and receiving loop (S1) for performing the late measurement and
**in that** the sample and hold circuit (6, 7) have a control device (8) for adjusting the instant, time period and/or number of sampling signals.

13. Apparatus according to claim 12,
**characterized**
**in that** two amplifiers (4, 5) are provided between the receiving loops (S1, S2) and the sample and hold circuits (6, 7).

14. Apparatus according to one of the claims 12 or 13,
**characterized**
**in that** a differential stage (12) is provided in which the signals of the early measurement and the late measurement are subtracted from one another.

15. Apparatus according to one of the claims 12 to 14,
**characterized**
**in that** in each case an amplifier (10, 11) is located between the sample and hold circuits (6, 7) and the differential stage (12).

16. Apparatus according to one of the claims 12 to 15,
**characterized**
**in that** each sample and hold circuit (6, 7) has a control device (8, 9), which is electrically connected to an excitation circuit (3).

17. Apparatus according to one of the claims 12 to 16,
**characterized**
**in that** the control device (8), which is associated with the sample and hold circuit (6) for the transmitting and receiving loop (S1) for the late measurement is adjustable as regards time instant, time period and/or number of sampling signals.

18. Apparatus according to one of the claims 12 to 17,
**characterized**
**in that** the transmitting and receiving loop (S1) symmetrically embraces on all sides the receiving loop (S2).

19. Apparatus according to one of the claims 12 to 18,
**characterized**
**in that** an analog indicating instrument (14) is provided for indicating the signal of the differential stage (12, 13).

20. Apparatus according to one of the claims 12 to 19,
**characterized**
**in that** the receiving loop (S2) is constructed as a differential measuring instrument.

21. Detector means,
**characterized**
**in that** two parallel connected apparatuses according to one of the claims 12 to 20 are provided and that their differential stages (12, 12*) are interconnected by a further differential stage (13).

22. Detector means according to claim 21,
**characterized**
**in that** the two parallel connected apparatuses are built up symmetrically to one another.

## Revendications

1. Procédé de détection électromagnétique d'objets, dans lequel des signaux primaires en forme d'impulsions sont émis par au moins une boucle émettrice, des signaux secondaires sont détectés à au moins deux instants différents par au moins une boucle réceptrice sous la forme de signaux de balayage et ceux-ci sont analysés,
***caractérisé***
***en ce qu***'avec la boucle réceptrice, on effectue d'abord une mesure précoce du signal secondaire,
***en ce que*** la boucle émettrice est employée comme boucle émettrice et réceptrice et avec celle-ci on effectue ensuite une mesure tardive du signal secondaire, et
***en ce que*** l'instant, la durée et/ou le nombre des signaux de balayage de la mesure précoce du signal secondaire et de la mesure tardive du signal secondaire sont adaptés les uns aux autres de manière à obtenir, pour la mesure précoce et pour la mesure tardive, une adaptation du niveau du signal.

2. Procédé selon la Revendication 1, ***caractérisé en ce que*** des impulsions d'emploi bipolaires sont délivrées à la boucle émettrice et réceptrice en tant qu'impulsions excitatrices.

3. Procédé selon l'une quelconque des Revendications précédentes, ***caractérisé en ce que*** la mesure précoce s'effectue environ 10 à 15 µs après la délivrance de l'impulsion excitatrice.

4. Procédé selon l'une quelconque des Revendications précédentes, ***caractérise en ce que*** la mesure tardive s'effectue environ 80 à 120 µs après la délivrance de l'impulsion excitatrice.

5. Procédé selon l'une quelconque des Revendications précédentes, ***caractérisé en ce que*** la mesure tardive est conduite avec une durée d'environ 1 à 50 µs.

6. Procédé selon l'une quelconque des Revendications précédentes, ***caractérisé en ce que,*** pour la mesure tardive, plusieurs signaux de balayage, en particulier environ cinq, sont sommés.

7. Procédé selon l'une quelconque des Revendications précédentes, ***caractérisé en ce que*** le signal de la mesure précoce et le signal de la mesure tardive sont soustraits l'un de l'autre.

8. Procédé selon l'une quelconque des Revendications précédentes, ***caractérisé en ce que,*** par une adaptation de l'instant, de la durée et/ou du nombre des signaux de balayage, on procède à une compensation de l'effet de sol.

9. Procédé selon la Revendication 8, ***caractérisé en ce que*** la compensation de l'effet de sol est effectuée en ajustant l'instant, la durée et/ou le nombre des signaux de balayage de la mesure tardive à proximité du sol en sorte que l'affichage soit compensé.

10. Procédé selon l'une quelconque des Revendications précédentes, ***caractérisé en ce que*** deux systèmes de boucle montés en parallèle sont employés, qui sont utilisés chacun pour soi suivant le procédé décrit aux Revendications 1 à 9, et ***en ce que*** les signaux des deux systèmes de boucle sont soustraits l'un de l'autre.

11. Procédé selon l'une quelconque des Revendications précédentes, ***caractérisé en ce qu***'une mesure différentielle est effectuée avec la boucle réceptrice pour la mesure précoce.

12. Dispositif de détection électromagnétique d'objets, en particulier pour appliquer le procédé selon l'une quelconque des Revendications 1 à 11, avec au moins une boucle émettrice pour envoyer un signal primaire en forme d'impulsion, avec au moins une boucle de réception (S2), avec au moins deux circuits d'échantillonnage et de maintien (6, 7) pour produire des signaux de balayage d'un signal secondaire à deux instants différents et avec un dispositif d'analyse,
***caractérisé***
***en ce que*** la boucle émettrice est conformée en boucle émettrice et réceptrice (S1),
***en ce que*** la boucle émettrice et réceptrice (S1) et la boucle réceptrice (S2) sont découplées galvaniquement,
***en ce qu****'un* circuit d'échantillonnage et de maintien (7) est relié à la boucle réceptrice (S2) pour la conduite d'une mesure précoce, et
***en ce qu****'un* autre circuit d'échantillonnage et de maintien (6) est relié à la boucle émettrice et réceptrice (S1) pour la conduite de la mesure tardive,
***en ce que*** les circuits d'échantillonnages et de maintien (6, 7) présentent un dispositif de commande (8) pour régler l'instant, la durée et/ou le nombre des signaux de balayage.

13. Dispositif selon la Revendication *12,* ***caractérisé en ce que*** deux amplificateurs (4, 5) sont prévus entre les boucles réceptrices (S1, S2) et les circuits d'échantillonnage et de maintien (6, 7).

14. Dispositif selon l'une quelconque des Revendications 12 ou 13, ***caractérisé en ce qu'***un étage différentiel (12) est prévu, dans lequel les signaux de la mesure précoce et de la mesure tardive sont soustraits l'un de l'autre.

15. Dispositif selon l'une quelconque des Revendications 12 à 14, ***caractérisé en ce qu****'un* amplificateur (10, 11) est placé à chaque fois entre les circuits d'échantillonnage et de maintien (6, 7) et l'étage différentiel (12).

16. Dispositif selon l'une quelconque des Revendications 12 à 15, ***caractérisé en ce que*** chaque circuit d'échantillonnage et de maintien (6, 7) présente un dispositif de commande (8, 9) qui est relié électriquement à un circuit excitateur (3).

17. Dispositif selon l'une quelconque des Revendications 12 à 16, ***caractérisé en ce que*** le dispositif de commande (8), qui est associé au circuit d'échantillonnage et de maintien (6) pour la boucle émettrice et réceptrice (S1) pour la mesure tardive, est réglable en termes d'instant, de durée et/ou de nombre des signaux de balayage.

18. Dispositif selon l'une quelconque des Revendications 12 à 17, ***caractérisé en ce que*** la boucle émettrice et réceptrice (S1) entoure la boucle réceptrice (S2) symétriquement de toutes parts.

19. Dispositif selon l'une quelconque des Revendications 12 à 18, ***caractérisé en ce qu****'un* instrument d'affichage analogique (14) est prévu pour afficher le signal de l'étage différentiel (12, 13).

20. Dispositif selon l'une quelconque des Revendications 12 à 19, ***caractérisé en ce que*** la boucle réceptrice (S2) est conformée en mesureur différentiel.

21. Dispositif détecteur, ***caractérisé en ce qu***'il est prévu deux dispositifs selon l'une quelconque des Revendications 12 à 20, montés en parallèle, ***en ce que*** leurs étages différentiels (12, 12*) sont reliés par un autre étage différentiel (13).

22. Dispositif détecteur selon la Revendication 21, ***caractérisé en ce que*** les deux dispositifs montés en parallèle sont d'une constitution symétrique l'une de l'autre.
